# EUROPEAN PATENT APPLICATION

(11) **EP 2 738 968 A1**
(43) Date of publication of application: **04.06.2014**
(21) Application number: 11860350.5
(22) Date of filing: 19.08.2011
(51) Int. Cl.: H04L 1/00

(54) **OPTICAL TRANSMISSION MODULE AND OPTICAL SIGNAL TRANSMISSION DEVICE**

(71) Applicant: Huawei Technologies Co., Ltd., Shenzhen, Guangdong 518129 (CN)
(72) Inventor: XIANG, Hui, Shenzhen Guangdong 518129 (CN)
(74) Representative: Epping - Hermann - Fischer
(86) International application number: PCT/CN2011/078619
(87) International publication number: WO 2012/119398

(57) **Abstract**

Embodiments of the present invention provide an optical sending module, an optical receiving module, an apparatus for sending an optical signal, and an apparatus for receiving an optical signal, and relate to the field of optical communications. The optical sending module includes: an FEC coding module and an optical sending interface. The apparatus for sending an optical signal includes: a protocol processing module and the optical sending module. The optical receiving module includes: an FEC decoding module and an optical receiving interface. The apparatus for receiving an optical signal includes: a protocol processing module and the optical receiving module. The present invention can reduce the scale, power consumption, and cost of the protocol processing module and reduce the network expansion cost.

## Description

### TECHNICAL FIELD

The present invention relates to the field of optical communication, and in particular, to an optical transmission module and an optical signal transmission apparatus.

### BACKGROUND

In an optical network, an optical transmission module includes an optical sending module and an optical receiving module, and an optical signal transmission apparatus includes an apparatus for sending an optical signal and an apparatus for receiving an optical signal. A sending device may utilize an apparatus for sending an optical signal to send data. A receiving device may utilize an apparatus for receiving an optical signal to receive data.

The prior art provides an apparatus for sending an optical signal that includes a protocol processing module and an optical sending module. The protocol processing module includes a protocol processing unit and an FEC (Forward Error Correction, forward error correction) coding module, and the optical sending module includes an optical sending interface, where the protocol processing unit corresponds to an optical transmission protocol. The protocol processing unit uses the corresponding optical transmission protocol to process data to be sent by a sending device and sends the processed data to the FEC coding module. The FEC coding module performs FEC coding on the data to obtain an FEC data frame and send the FEC data frame to the optical sending interface. The optical sending interface converts the FEC data frame to an optical signal and sends the optical signal. A plurality of different FEC coding modules may be integrated in the protocol processing module, an optical sending interface which corresponds to each FEC coding module corresponds is set in the optical sending module, and each pair of the FEC coding module and the optical sending interface supports one transmission distance, so that the apparatus for sending an optical signal can send optical signals with different transmission distances.

The prior art also provides an apparatus for receiving an optical signal that includes a protocol processing module and an optical receiving module. The protocol processing module includes a protocol processing unit and an FEC decoding module. The protocol processing unit corresponds to an optical transmission protocol. The optical receiving module includes an optical receiving interface, where the optical receiving interface receives an optical signal, converts the optical signal to an FEC data frame, and sends the FEC data frame to the FEC decoding module. The FEC decoding module performs FEC decoding on the FEC data frame and sends the decoded data to the protocol processing unit, and the protocol processing unit processes the data according to the corresponding optical transmission protocol. A plurality of different FEC decoding modules may be integrated in the protocol processing module, an optical receiving interface which corresponds to each FEC decoding module corresponds to is set in the optical receiving module, and each pair of the FEC decoding module and the optical receiving interface supports one transmission distance, so that the apparatus for receiving an optical signal can receive optical signals with different transmission distances.

In the implementation of the present invention, the inventor finds at least the following problems in the prior art:
FEC coding modules or FEC decoding modules are integrated in a protocol processing module, and the proportion of the FEC coding modules or FEC decoding modules in the protocol processing module is large, so integrating multiple FEC coding modules or FEC decoding modules in the protocol processing module apparently increases the scale, power consumption, and cost of the protocol processing module.

### SUMMARY

In order to reduce the scale, power consumption, and cost of a protocol processing module, embodiments of the present invention provide an optical sending module, an optical receiving module, an apparatus for sending an optical signal, and an apparatus for receiving an optical signal. The technical solutions are as follows:
An optical sending module is provided, where the optical sending module includes:
   an FEC coding module and an optical sending interface, where
   the FEC coding module is configured to receive data to be sent, perform FEC coding on the data to be sent to obtain an FEC data frame, and send the FEC data frame to the optical sending interface; and
   the optical sending interface is configured to receive the FEC data frame, convert the FEC data frame to an optical signal, and send the converted optical signal.

An apparatus for sending an optical signal is provided, where the apparatus for sending an optical signal includes a protocol processing module and the optical sending module; where the protocol processing module includes a protocol processing unit, and the protocol processing unit sends data to be sent to the optical sending module;

An optical receiving module that corresponds to the optical sending module is provided, where the optical receiving module includes:
an optical receiving interface and an FEC decoding module, where
the optical receiving interface is configured to receive an optical signal, convert the optical signal to an FEC data frame, and send the FEC data frame to the FEC decoding module; and
the FEC decoding module is configured to receive the FEC data frame, perform FEC decoding on the FEC data frame to recover data, and send the recovered data.

An apparatus for receiving an optical signal that corresponds to the apparatus for sending an optical signal, and the apparatus for receiving an optical signal includes a protocol processing module and the optical receiving module; where the protocol processing module includes a protocol processing unit, and the optical receiving module sends recovered data to the protocol processing module.

In the present invention, an optical sending module includes an FEC coding module and an optical sending interface, and an optical receiving module includes an FEC decoding module and optical receiving interface, so as to make a protocol processing module include a protocol processing unit and does not need to include an FEC coding module or FEC decoding module, reducing the scale, cost, and power consumption of the protocol processing module.

### BRIEF DESCRIPTION OF DRAWINGS

FIG. 1 is a schematic diagram of an optical sending module according to Embodiment 1 of the present invention;
FIG. 2 is a schematic diagram of a first apparatus for sending an optical signal according to Embodiment 1 of the present invention;
FIG. 3 is a schematic diagram of a second apparatus for sending an optical signal according to Embodiment 1 of the present invention;
FIG. 4 is a schematic diagram of an optical receiving module according to Embodiment 2 of the present invention;
FIG. 5 shows the structural of an FEC data frame according to Embodiment 2 of the present invention;
FIG. 6 is a schematic diagram of a first apparatus for receiving an optical signal according to Embodiment 2 of the present invention;
FIG. 7 is a schematic diagram of a second apparatus for receiving an optical signal according to Embodiment 2 of the present invention;
FIG. 8 is a schematic diagram of an optical sending module according to Embodiment 3 of the present invention;
FIG. 9 is a schematic diagram of an apparatus for sending an optical signal according to Embodiment 3 of the present invention;
FIG. 10 is a schematic diagram of an optical receiving module according to Embodiment 4 of the present invention; and

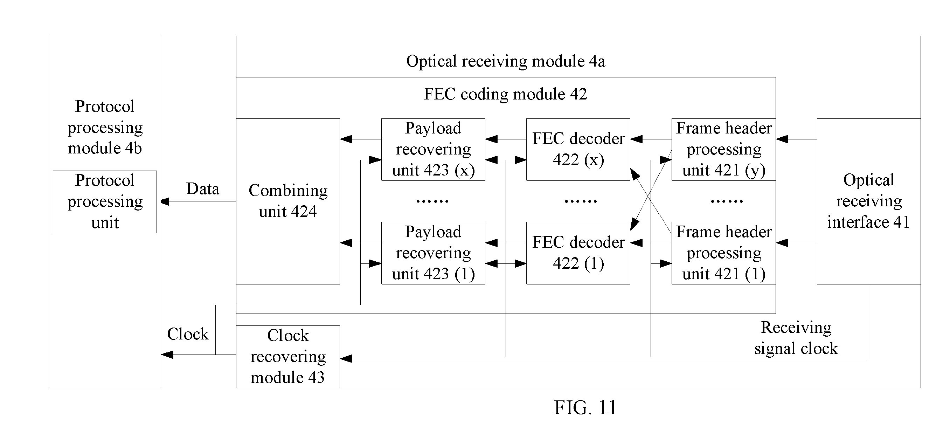

FIG. 11 is a schematic diagram of an apparatus for receiving an optical signal according to Embodiment 4 of the present invention.

### DESCRIPTION OF EMBODIMENTS

To make the objectives, technical solutions, and advantages of the present invention more comprehensible, the following further describes the embodiments of the present invention in detail with reference to the accompanying drawings.

### Embodiment 1

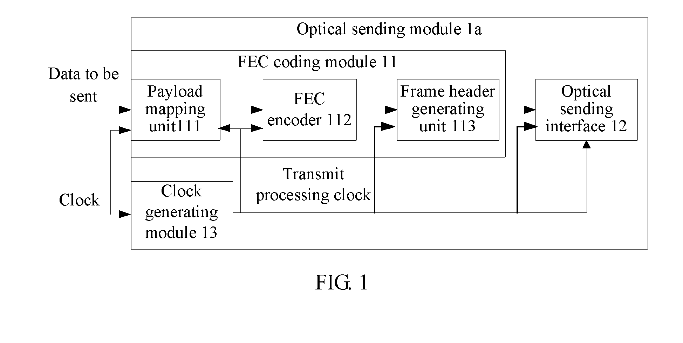

As shown in FIG. 1, an embodiment of the present invention provides an optical sending module 1a, including:
an FEC coding module 11, configured to receive data to be sent from a protocol processing module, perform FEC coding on the data to be sent to obtain an FEC data frame, and send the FEC data frame to the optical sending interface 12; and
an optical sending interface 12, configured to receive the FEC data frame, convert the FEC data frame to an optical signal, and send the converted optical signal.

A protocol processing module only includes a protocol processing unit that corresponds to an optical transmission protocol. The protocol processing module processes the data to be sent in the sending device according to the optical transmission protocol corresponding to the protocol processing unit and sends the processed data to the FEC coding module 11 of an optical sending module 1a.

Further, an optical sending module 1a further includes:
a clock generating module 13, configured to receive a clock sent by a protocol processing module, perform a frequency conversion on the clock to obtain a transmission processing clock, take the transmission processing clock as a reference clock for the FEC coding module 11 to perform FEC coding, and take the transmission processing clock as a reference clock for the optical sending interface 12 to send an optical signal.

Further, an FEC coding module 11 includes a payload mapping unit 111, an FEC encoder 112 and a frame header generating unit 113;
the payload mapping unit 111 is configured to receive the data to be sent from the protocol processing module, map the data to be sent to a payload position of a transmission data frame, and send the transmission data frame to the FEC encoder 112;
the FEC encoder 112 is configured to receive the transmission data frame, perform FEC coding on the data to be sent in the transmission data frame to obtain an FEC redundant code, fill the FEC redundant code into an FEC coding position of the transmission data frame, and send the transmission data frame to the frame header generating unit 113;
a blank transmission data frame structure is preset in the payload mapping unit 111; the transmission data frame includes m+n bits, where the m bits in the beginning are payload positions for data to be sent, and the n bits in the rear is the FEC coding position for filling an FEC redundant code, and the values of m and n may be fixed values set by a technician according to requirements;
during the transmission of data in optical networks, bit errors may occur, and an optical sending module 1a performs FEC coding on the data to be sent to obtain an FEC redundant code by using the FEC codec technology before sending the data to be sent, and sends the FEC redundant code and data to be sent together to a receiving device, so that the receiving device may correct the bit errors in the data to be sent by using the FEC decode technology;
the frame header generating unit 113 is configured to receive the transmission data frame, add a frame header position for the transmission data frame, fill frame header information into the frame header position to obtain an FEC data frame, and send the FEC data frame to the optical sending interface 12;
frame header information may be set by a technician and the set frame header information may be stored in a frame header generating unit 113, then a frame header generating unit 113 adds a frame header position of k bits to the transmission data frame and fills pre-stored frame header information to the frame header position to obtain an FEC data frame. The frame structure of an FEC data frame is shown in Table 1, and an FEC data frame includes a frame header position, a payload position and an FEC coding position, where the frame header information filled in the frame header position is used for frame boundary positioning, so as to accurately find the FEC data frame boundaries, thereby determining an FEC coding position and a payload position in order to properly conduct the FEC error correction operation;

**Table 1**

| | | |
|---|---|---|
| Frame header position | Payload position | FEC coding position |

a clock generating module 13 performs (m+n+k)/n frequency conversion on a clock sent by the protocol processing module to obtain a transmission processing clock, takes the transmission processing clock as a reference clock for a payload mapping unit 111 when the payload mapping unit 111 maps data to be sent, takes the transmission processing clock as a reference clock for an FEC encoder 112 when the FEC encoder 112 performs FEC coding, and takes the transmission processing clock as a reference clock for the frame header generating unit 113 when the frame header generating unit 113 generates the frame header of an FEC data frame;
the payload mapping unit 111 also receives the clock sent by a protocol processing module. The inside of a payload mapping unit 111 has a buffer queue, and the payload mapping unit 111 takes the clock sent by the protocol processing unit as the reference clock in order to receive the data to be sent from the protocol processing module and to buffer the data to be sent into the buffer queue; then the payload mapping unit 111 takes the transmission processing clock generated from a clock generating module 13 as another reference clock to extract the data to be sent from the buffer queue, and maps the data to be sent to a blank transmission data frame.

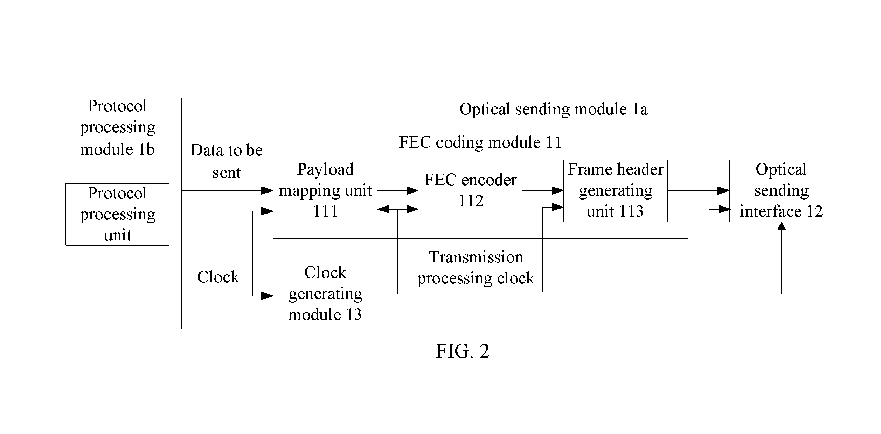

In this embodiment, an FEC data frame structure that is irrelevant to an optical transmission protocol is defined in advance in an optical sending module 1a, including a frame header position, a payload position and an FEC coding position, as a result, when the FEC coding module 11 converts the data to be sent to the FEC data frame, the FEC coding module 11 is independent from the optical transmission protocol corresponding to the protocol processing unit in the protocol processing module, so as to make the optical sending module 1a irrelevant to the optical transmission protocol corresponding to the protocol processing unit in the protocol processing module; so when replacing the optical transmission protocol of an apparatus for sending an optical signal is required for network expansion, only the protocol processing module that includes a protocol processing unit needs to be replaced, thereby reducing the cost of network expansion.
In addition, referring to FIG. 2, this embodiment provides an apparatus for sending an optical signal, and the apparatus for sending an optical signal includes a protocol processing module 1b and the optical sending module 1a according to this embodiment;
the protocol processing module 1b includes a protocol processing unit that corresponds to an optical transmission protocol; the protocol processing unit processes the data to be sent in the sending device according to the optical transmission protocol corresponding to the protocol processing unit and sends the processed data to the optical sending module 1a.

Further, an apparatus for sending an optical signal is capable of supporting transmissions with different distances, and each optical sending module 1a is capable of supporting a transmission distance, so that the apparatus for sending an optical signal may be set to include a plurality of optical sending modules 1a in order to make the apparatus for sending an optical signal support different transmission distances, where the FEC coding module 11 in each optical sending module 1a adopts different FEC coding manner and the send power and other parameters of each optical sending interface 12 are different from each other, then the FEC coding module 11 in each optical sending module 1a fills the data to be sent into the payload position of the transmission data frame, performs FEC coding on the data to be sent by using respective FEC coding manner to obtain the FEC redundant code, fills the obtained FEC redundant code into the FEC coding position of the transmission data frame, and adds a frame header position before the transmission data frame, and then the optical sending interface 12 converts the FEC data frame to an optical signal and send the optical signal; in addition, the frame header information filled in the FEC coding module 11 of each optical sending module 1a is the same.

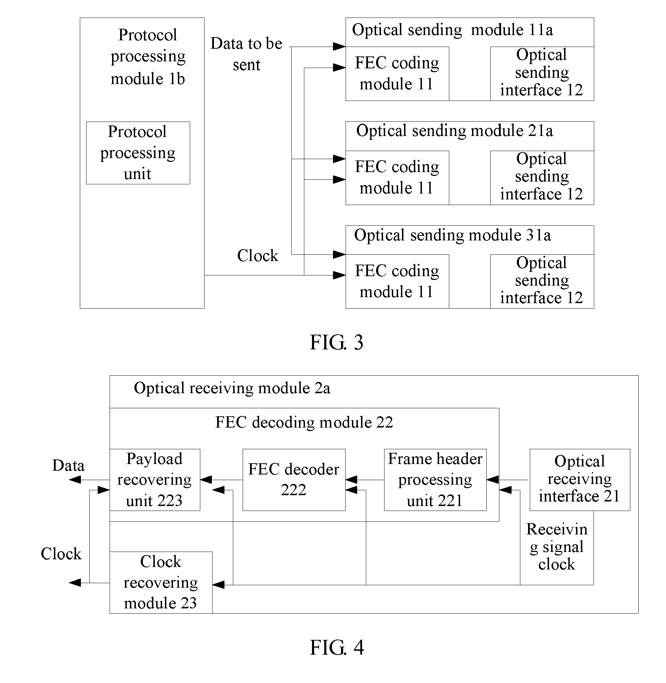

For example, referring to the apparatus for sending an optical signal shown in FIG. 3, the apparatus for sending an optical signal includes a protocol processing module 1b and optical sending modules 11a, 21a, and 31a, and the protocol processing unit in the protocol processing module 1b sends the data to be sent to optical sending modules 11a, 21a, and 31a respectively; the optical sending modules 11a, 21 a, and 31a perform FEC coding on the data to be sent according to their respective FEC coding manners, and converts the data to be sent into an optical signal and send the optical signal, where the optical sending module 11a supports a first transmission distance, the optical sending module 21a supports a second transmission distance, and the optical sending module 31a supports a third transmission distance, in addition, the first transmission distance is less than the second transmission distance and the second transmission distance is less than the third transmission distance.

The protocol processing unit 1b includes a protocol processing unit but not an FEC coding module 1a, thereby reducing the scale, cost, and power consumption of the protocol processing module 1b, and if replacing the optical transmission protocol of the apparatus for sending an optical signal is required, only the protocol processing module 1b of the protocol processing unit needs to be replaced, thereby reducing the cost of network expansion.

In this embodiment of the present invention, the optical sending module includes an FEC coding module and an optical sending interfaces, so that a protocol processing module includes a protocol processing unit but not the FEC coding module, thereby reducing the scale, cost, and power consumption of the protocol processing module, and if replacing the optical transmission protocol of an apparatus for sending an optical signal is required, only the upper layer protocol processing module of the protocol processing unit needs to be replaced, thereby reducing the cost of network expansion.

### Embodiment 2

An embodiment of the present invention provides an optical receiving module 2a. The optical receiving module 2a corresponds to the optical sending module 1a according to Embodiment 1, referring to FIG. 4, the optical receiving module 2a includes:
an optical receiving interface 21, configured to receive an optical signal, convert the optical signal to an FEC data frame, and send the FEC data frame to an FEC decoding module 22; and
the FEC decoding module 22, configured to receive the FEC data frame, perform FEC decoding on the FEC data frame to recover data, and send the recovered data.

The FEC decoding module 22 sends the recovered data to a protocol processing module.

Further, the optical receiving interface 21 is further configured to extract a receiving signal clock from the received optical signal and take the receiving signal clock as a reference clock for the FEC decoding module 22 to perform the FEC decoding.

Correspondingly, the optical receiving module 2a further includes:
a clock recovery module 23, configured to perform frequency division on the receiving signal clock extracted by the optical receiving interface 21 to obtain a clock, and send the clock to the protocol processing module.

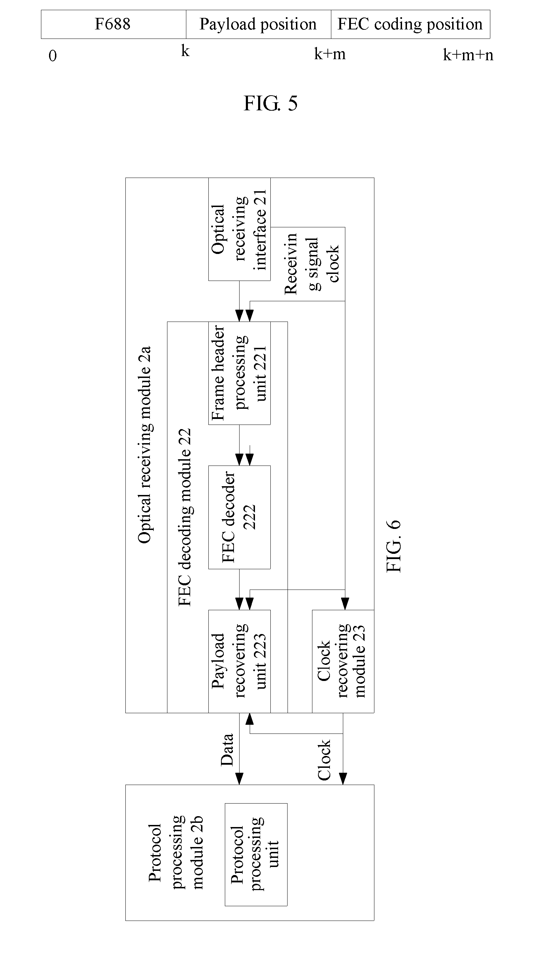

Further, the FEC decoding module 22 includes a frame header processing unit 221, an FEC decoder 222 and a payload recovering unit 223;
the frame header processing unit 221 is configured to receive the FEC data frame sent by the optical receiving interface 21, identify frame header information of the FEC data frame according to stored frame header information, determine a frame boundary of the FEC data frame and an FEC coding position of the FEC data frame, and send the FEC data frame to the FEC decoder 222;
a technician may set frame header information, and store the set frame header information to the frame header processing unit 221, in addition, the frame header information stored in the frame header processing unit 221 is the same as the frame header information stored in the frame header generating unit 113 in the optical sending module 1a;
for example, referring to FIG. 5, the payload position in the FEC data frame takes m bits, an FEC coding position takes n bits, and the k bits before the payload position is a frame header position; it is assumed that the frame header information stored in the frame header processing unit 221 is F688, the frame header processing unit 221 matches the bits in an FEC data frame, as shown in FIG. 5 with the frame header information F688, and identify frame header information F688 of the FEC data frame, where bit(0) of the identified frame header information is a frame boundary, and bit(k+m) to bit(k+m+n) is an FEC coding position;
the FEC decoder 222 is configured to receive the FEC data frame, extract an FEC redundant code in the FEC data frame according to the determined frame boundary and FEC coding position, perform FEC decoding on the data in the FEC data frame according to the FEC redundant code, and send the FEC data frame to the payload recovering unit 223;
when the FEC decoder 222 performs FEC decoding on data in the FEC data frame according to the FEC redundant code, if the FEC decoder 222 finds error bits in the FEC data frame, it corrects the error bits;
the payload recovering unit 223 is configured to receive the FEC data frame, remove the frame header information and the FEC redundant code in the FEC data frame to recover data, and send the recovered data;
the optical receiving interface 21 may take the receiving signal clock as a reference clock for the frame header processing unit 221 to determine the FEC data frame boundary and the FEC coding position; the receiving signal clock may be took as the reference clock for the FEC decoder 222 to perform the FEC decoding; and the receiving signal clock may be took as the reference clock for the payload recovering unit 223 to recover the data;
a clock recovery module 23 may also send the obtained clock to the payload recovering unit 223, where the inside of the payload recovering unit 223 has a buffer queue, then the payload recovering unit 223 may take the receiving signal clock sent by the optical receiving interface 21 as the reference clock for data recovering and buffer the recovered data into the buffer queue, and take the clock sent by the clock recovery module 23 as another reference clock for extracting data from the buffer queue and sending the extracted data to a protocol processing module.

In this embodiment, the frame structure of an FEC data frame is irrelevant to an optical transmission protocol, as a result, when the FEC decoding module 22 recovers data, it does not need to rely on the optical transmission protocol corresponding to the protocol processing unit in the protocol processing module, so when replacing the optical transmission protocol is required for network extension, only the protocol processing module needs to be replaced, thereby reducing the cost of network expansion.

Further, referring to FIG. 5, this embodiment further provides an apparatus for receiving an optical signal, and the apparatus for receiving an optical signal corresponds to the apparatus for sending an optical signal according to Embodiment 1, including:
a protocol processing module 2b and the optical receiving module 2a according to this embodiment, and the protocol processing module 2b includes a protocol processing unit that corresponds to an optical transmission protocol, and the optical receiving module 2a sends the recovered data to the protocol processing module 2b;

The protocol processing module 2b includes the protocol processing unit but not the FEC decoding module 22, as a result, the scale, cost, and power consumption of the protocol processing module 2b is reduced; In addition, the frame structure of the FEC data frame is irrelevant to the optical transmission protocol corresponding to the protocol processing unit in the protocol processing module, so when replacing the optical transmission protocol of the apparatus for receiving an optical signal is required for network extension, only the protocol processing module 2b that includes a protocol processing unit needs to be replaced, thereby reducing the cost of network expansion.

The apparatus for sending an optical signal is capable of supporting signal transmissions with different distances, and an apparatus for receiving an optical signal corresponding to the apparatus for sending an optical signal is also capable of receiving optical signals with different transmission distances, and each optical receiving module 2a may receive a transmission distance, so that the apparatus for receiving an optical signal may be set to include a plurality of optical receiving modules 2a in order to make the apparatus for receiving an optical signal be capable of receiving optical signals with different transmission distances, where the optical receiving interface 21 and FEC coding module 22 in each optical receiving module 2a are different from each other and the FEC decoding modules 22 are different from each other too, and the optical receiving interface 21 in each optical receiving module 2a adopts different receiving power and other parameters to receive the optical signal, and the FEC coding module 22 in each optical receiving module 2a recovers data from the FEC data frame by using different FEC decoding manners. For example, referring to the apparatus for receiving an optical signal shown in FIG. 6, the apparatus for receiving an optical signal includes a protocol processing module 2b and optical receiving modules 12a, 22a, and 32a, where the optical receiving modules 12a, 22a, and 32a perform FEC decoding according to their respect FEC decoding manners to recover the data and send the recovered data to the protocol processing module 2b; the optical receiving module 12a receives an optical signal with a first send distance, the optical receiving module 22a receives an optical signal with a second transmission distance, and the optical receiving module 32a receives an optical signal with a third transmission distance, in addition, the first transmission distance is less than the second transmission distance and the second transmission distance is less than the third transmission distance.

In this embodiment of the present invention, an optical receiving module includes an FEC decoding module and an optical receiving interface, so that a protocol processing module includes a protocol processing unit but not the FEC decoding module, thereby reducing the scale, cost, and power consumption of the protocol processing module, and if replacing the optical transmission protocol of an apparatus for receiving an optical signal is required, only the protocol processing module that includes a protocol processing unit needs to be replaced, thereby reducing the cost of network expansion.

### Embodiment 3

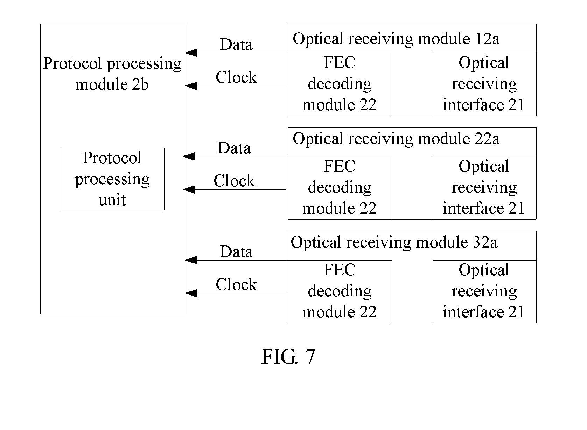

As shown in FIG. 7, an embodiment of the present invention provides an optical sending module 3a, including:
an FEC coding module 31, configured to receive data to be sent from a protocol processing module, perform FEC coding on the data to be sent to obtain an FEC data frame, and send the FEC data frame to an optical sending interface 32;
the optical sending interface 32, configured to receive the FEC data frame, convert the FEC data frame to an optical signal, and send the converted optical signal.

The protocol processing module only includes a protocol processing unit that corresponds to an optical transmission protocol. The protocol processing module processes the data to be sent in the sending device according to the optical transmission protocol corresponding to the protocol processing unit and sends the processed data to the FEC coding module 31 of an optical sending module 3a.

Further, the optical sending module 3a further includes:
a clock generating module 33, configured to receive a clock sent by a protocol processing module, perform a frequency conversion on the clock to obtain a transmission processing clock, take the transmission processing clock as a reference clock for the FEC coding module to perform the FEC coding, and take the transmission processing clock as a reference clock for the optical sending interface 32 to send the optical signal.

Further, the FEC coding module 31 includes a splitting unit 311, x payload mapping units 312, x FEC encoders 313 and y frame header generating units 314; where the payload mapping unit 312 corresponds to the FEC encoder 313 and values of x and y are integers greater than 0;
the splitting unit 311 is configured to receive the data to be sent from a protocol processing module, to split the data to be sent into x channels of data to be sent, and sent the x channels of data to be sent to the x payload mapping units 312 separately;
the payload mapping unit 312 is configured to receive one channel of data to be sent from a splitting unit 311, map the channel of data to be sent to a payload position of a transmission data frame, and sent the transmission data frame to the corresponding FEC encoder 313;
the FEC encoder 313 is configured to receive the transmission data frame sent by the corresponding payload mapping unit 312, perform FEC coding on the data to be sent in the transmission data frame to obtain an FEC redundant code, to fill the FEC redundant code into an FEC coding position of the transmission data frame, and split the transmission data frame into y channels and sent the y channels of transmission data frames to the y frame header generating units 314 separately;
each pair of payload mapping unit 312 and FEC encoder 313 encapsulates a channel of data to be sent into a transmission data frame, and splits the transmission data frame into y channels of transmission data frames.
the frame header generating unit 314 is configure to receive the transmission data frames sent by the x FEC encoders 313, to reconstruct x transmission data frames, add a frame header position for the x reconstructed transmission data frames, fill frame header information into the added frame header position to obtain an FEC data frame, and send the FEC data frame to the optical sending interface 32;
as shown in Table 2, the FEC data frame obtained by each frame header unit 314 includes frame header information and x transmission data frame;

**Table 2**

| Frame header information | Data to be sent (1) | FEC redundant code (1) | Data to be sent (2) | FEC redundant code (2) |
|---|---|---|---|---|
| ······ | Data to be sent (x) | FEC redundant code (x) | | |

the clock generating module 33 may take the transmission processing clock as the reference clock for the each payload mapping unit 312 to map data to be sent, and may take the transmission processing clock as the reference clock for each FEC encoder 313 to perform the FEC coding, and may take the transmission processing clock as the reference clock for the frame header generating unit 314 to filling frame header information;
the inside of each payload mapping unit 312 has a buffer queue, and each payload mapping unit 312 also takes the clock sent by the protocol processing unit as the reference clock in order to receive the data to be sent from the splitting unit 311 and to buffer the data to be sent into the buffer queue; then the payload mapping unit 312 takes the transmission processing clock generated from a clock generating module 33 as another reference clock to extract the data to be sent from the buffer queue, and maps the extracted data to be sent to the payload position of a blank transmission data frame;
an FEC data frame structure that is irrelevant to an optical transmission protocols is defined in advance in the FEC coding module 31, as a result, when the FEC coding module 31 converts the data to be sent to the FEC data frame, the FEC coding module 31 is independent from the optical transmission protocol corresponding to the protocol processing module, so as to make the optical sending module 3a irrelevant to the optical transmission protocol corresponding to the protocol processing module; so when replacing the optical transmission protocol of an apparatus for sending an optical signal is required for network expansion, only the protocol processing module that includes a protocol processing unit needs to be replaced, thereby reducing the cost of network expansion

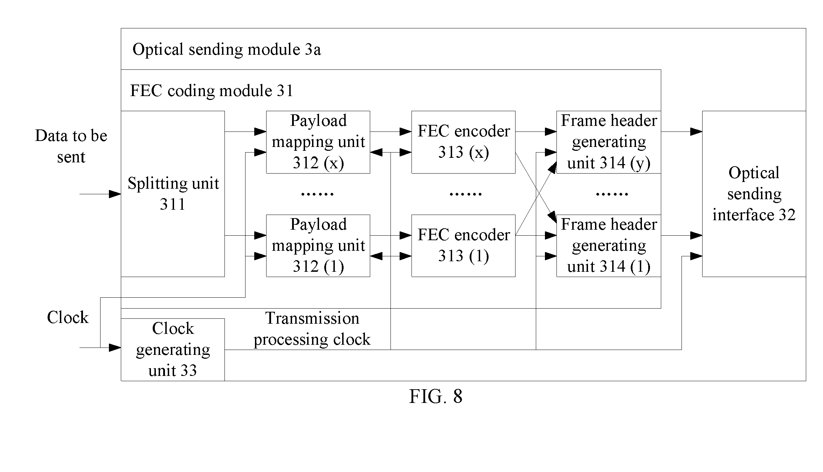

In addition, referring to FIG. 8, this embodiment provides an apparatus for sending an optical signal, and the apparatus for sending an optical signal includes a protocol processing module 3b and the optical sending module 3a according to this embodiment, in which,
the protocol processing module 3b includes a protocol processing unit that corresponds to an optical transmission protocol; the protocol processing unit processes data to be sent in the sending device according to the optical transmission protocol corresponding to the protocol processing unit and sends the processed data to an optical sending module 31.

In this embodiment of the present invention, an optical sending module includes an FEC coding module and an optical sending interfaces, so that a protocol processing module includes a protocol processing unit but not the FEC coding module, thereby reducing the scale, cost, and power consumption of the protocol processing module, and if replacing the optical transmission protocol of an apparatus for sending an optical signal is required, only the protocol processing module of the protocol processing unit needs to be replaced, thereby reducing the cost of network expansion.

### Embodiment 4

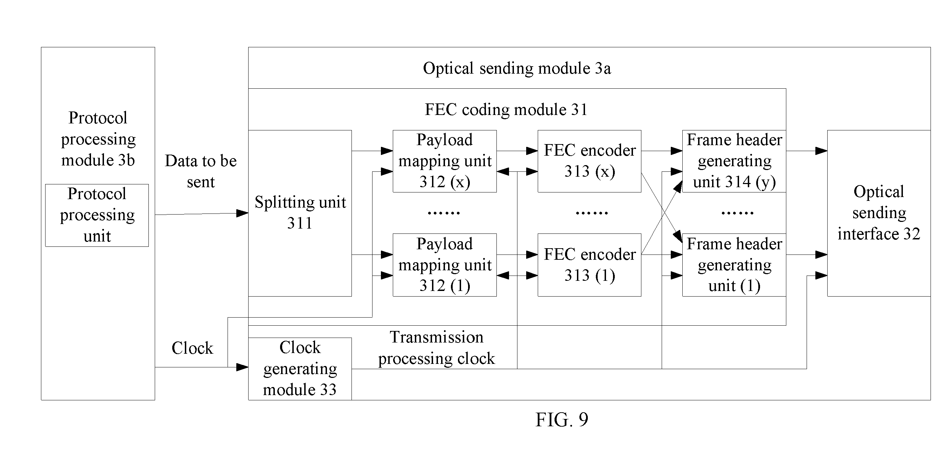

An embodiment of the present invention provides an optical receiving module 4a. The optical receiving module 4a corresponds to the optical sending module 3a according to Embodiment 3, referring to FIG. 9, the optical receiving module 4a includes:
an optical receiving interface 41, configured to receive an optical signal, convert the optical signal to an FEC data frame, and send the FEC data frame to an FEC decoding module 42; and
the FEC decoding module 42, configured to receive the FEC data frame, perform FEC decoding on the FEC data frame to recover data, and send the recovered data.

The FEC decoding module 42 sends the recovered data to a protocol processing module.

Further, the optical receiving interface 41 is further configured to extract a receiving signal clock from the received optical signal and take the receiving signal clock as a reference clock for the FEC decoding module to perform the FEC decoding.

Correspondingly, an optical receiving module 4a further includes:
a clock recovery module 43, configured to perform frequency division on the receiving signal clock extracted by the optical receiving interface 41 to obtain a clock, and send the clock to the protocol processing module.

Further, an FEC decoding module 42 includes y frame header processing units 421, x FEC decoders 422, x payload recovering units 423 and a combining unit 424; the FEC decoder 422 corresponds to the payload recovering unit 423 and the values of x and y are integers greater than 0, in which,
the frame header processing unit 421 is configured to receive the FEC data frame sent by the optical receiving interface 41, identify frame header information of the FEC data frame according to stored frame header information, determine frame boundaries of x transmission data frames in the FEC data frames to define x transmission data frames, determine an FEC coding position in each transmission data frame, and send the x transmission data frames to the x FEC decoders 422 separately;
the FEC decoder 422 is configured to receive the FEC data frames sent by the y frame header processing units 421, extract an FEC redundant code in each transmission data frame according to the determined FEC coding position in each transmission data frame, perform FEC decoding on data in each transmission data frame according to each FEC redundant code, and send each transmission data frame to a corresponding payload recovering unit 423;
when an FEC decoder 422 performs FEC decoding on the data in the transmission data frame according to the FEC redundant code, if the FEC decoder 222 finds error bits in the transmission data frame, it corrects the error bits.
the payload recovering unit 423 is configured to receive y transmission data frames sent by the corresponding FEC decoder, remove the FEC redundant code in each transmission data frame, recover y paths of data, reconstruct y paths of data, and send the reconstructed data to the combining unit 424;
the combining unit 424 is configured to receive the data sent by the x payload recovering units 423, combine the x channels of data into one channel of data, and sent the data to a protocol processing module;
the optical receiving interface 41 may take the receiving signal clock as the reference clock of the FEC data frame for each frame header processing unit 421 to determine boundary the FEC coding position; take the receiving signal clock as the reference clock for each FEC decoder 422 to performing the FEC decoding; and take the receiving signal clock as the reference clock for each payload recovering unit 423 to recover the data;
the clock recovery module 43 may also send the obtained clock to each payload recovering unit 423, where the inside of each payload recovering unit 423 has a buffer queue, then each payload recovering unit 423 takes the receiving signal clock sent by the optical receiving interface 41 as the reference clock for recovering data and buffering the recovered data into the buffer queue, and take the clock sent by the clock recovering module 43 as another reference clock for extracting data from the buffer queue and sending the extracted data to a protocol processing module.

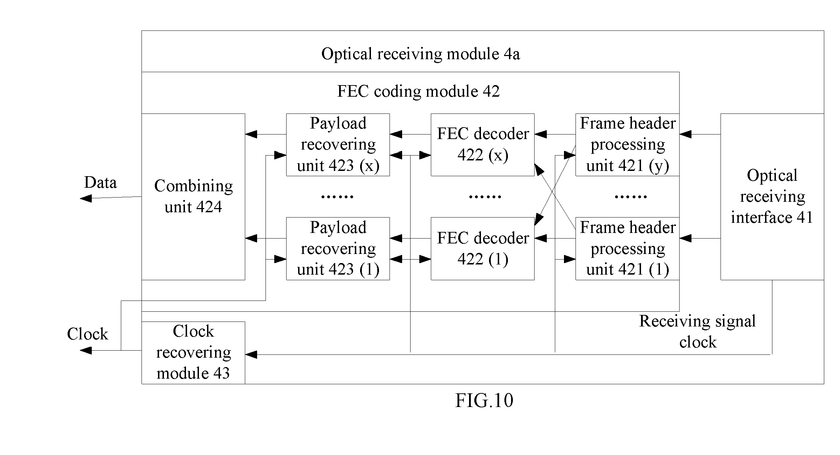

Further, referring to FIG. 10, this embodiment also provides an apparatus for receiving an optical signal, and the apparatus for receiving an optical signal corresponds to the apparatus for sending an optical signal according to Embodiment 3, including:
a down layer protocol processing module 4b and an optical receiving module 4a according to this embodiment, and the protocol processing module 4b includes a protocol processing unit that corresponds to an optical transmission protocol, and the optical receiving module 4a sends the recovered data to the protocol processing board.

In this embodiment of the present invention, an optical receiving module includes an FEC decoding module and an optical receiving interface, so that a protocol processing module includes a protocol processing unit but not the FEC decoding module, thereby reducing the scale, cost, and power consumption of a protocol processing module; in addition, the frame structure of an FEC data frame is irrelevant to the optical transmission protocol corresponding to the protocol processing unit in the protocol processing module, so when replacing the optical transmission protocol of an apparatus for receiving an optical signal is required, only the protocol processing module that includes a protocol processing unit needs to be replaced, thereby reducing the cost of network expansion.

A person of ordinary skill in the art may understand that all or a part of the steps of the foregoing embodiments may be implemented through hardware, or may be implemented by a program instructing relevant hardware. The program may be stored in a computer readable storage medium. The storage medium may be a read-only memory, a magnetic disk, or an optical disk.

The foregoing descriptions are merely preferred embodiments of the present invention, but are not intended to limit the present invention. Any modification, equivalent replacement, or improvement derived within the spirit and principle of the present invention shall fall within the protection scope of the present invention.

## Claims

1. An optical sending module, comprising:
a forward error correction (FEC) coding module and an optical sending interface, wherein
the FEC coding module is configured to receive data to be sent, perform FEC coding on the data to be sent to obtain an FEC data frame, and send the FEC data frame to the optical sending interface; and
the optical sending interface is configured to receive the FEC data frame, convert the FEC data frame to an optical signal, and send the converted optical signal.

2. The optical sending module according to claim 1, wherein the FEC coding module comprises:
a payload mapping unit, an FEC encoder, and a frame header generating unit, wherein
the payload mapping unit is configured to receive the data to be sent, map the data to be sent to a payload position of a transmission data frame, and sent the transmission data frame to the FEC encoder;
the FEC encoder is configured to receive the transmission data frame, perform FEC coding on the data to be sent in the transmission data frame to obtain an FEC redundant code, fill the FEC redundant code into an FEC coding position of the transmission data frame, and sent the transmission data frame to the frame header generating unit; and
the frame header generating unit is configured to receive the transmission data frame, add a frame header position for the transmission data frame, add frame header information into the frame header position to obtain an FEC data frame, and send the FEC data frame to the optical sending interface.

3. The optical sending module according to claim 1, wherein the FEC coding module comprises:
a splitting unit, x payload mapping units, x FEC encoders and y frame header generating units; wherein the payload mapping units correspond to the FEC encoders on a one-to-one basis, and x and y are integers greater than 0;
the splitting unit is configured to receive the data to be sent, split the data to be sent into x channels of data to be sent, and sent the x channels of data to be sent to the x payload mapping units separately;
the payload mapping unit is configured to receive one channel of data to be sent, map the channel of data to be sent to a payload position of a transmission data frame, and sent the transmission data frame to the corresponding FEC encoder;
the FEC encoder is configured to receive the transmission data frame sent by the corresponding payload mapping unit, perform FEC coding on the data to be sent in the transmission data frame to obtain an FEC redundant code, fill the FEC redundant code into an FEC coding position of the transmission data frame, split the transmission data frame into y channels, and send the y channels of transmission data frames to the y frame header generating units separately; and
the frame header generating unit is configured to receive the transmission data frames sent by the x FEC encoders, reconstruct x transmission data frames, add a frame header position for the x reconstructed transmission data frames, fill frame header information into the added frame header position to obtain an FEC data frame, and send the FEC data frame to the optical sending interface.

4. The optical sending module according to any one of claims 1 to 3, wherein the optical sending module further comprises:
a clock generating module, configured to receive a clock, perform frequency conversion on the clock to obtain a transmission processing clock, take the transmission processing clock as a reference clock for the FEC coding module to perform the FEC coding, and take the transmission processing clock as a reference clock for the sending interface to send the optical signal.

5. An apparatus for sending an optical signal, for sending an optical signal comprising a protocol processing module and the optical sending module according to any one of claims 1 to 4, wherein the protocol processing module comprises a protocol processing unit, and the protocol processing unit sent data to be sent to the optical sending module.

6. An optical receiving module that corresponds to the optical sending module according to claim 1, comprising:
an optical receiving interface and a forward error correction FEC decoding module, wherein
the optical receiving interface is configured to receive an optical signal, convert the optical signal to an FEC data frame, and send the FEC data frame to the FEC decoding module; and
the FEC decoding module is configured to receive the FEC data frame, perform FEC decoding on the FEC data frame to recover data, and send the recovered data.

7. The optical receiving module according to claim 6, wherein the FEC decoding module comprises:
a frame header processing unit, an FEC decoder, and a payload recovering unit, wherein
the frame header processing unit is configured to receive the FEC data frame sent by the optical receiving interface, identify frame header information of the FEC data frame according to stored frame header information, determine a frame boundary of the FEC data frame and an FEC coding position of the FEC data frame, and send the FEC data frame to the FEC decoder;
the FEC decoder is configured to receive the FEC data frame, extract an FEC redundant code in the FEC data frame according to the determined frame boundary and FEC coding position, perform FEC decoding on the data in the FEC data frame according to the FEC redundant code, and send the FEC data frame to the payload recovering unit; and
the payload recovering unit is configured to receive the FEC data frame, remove the frame header information and the FEC redundant code in the FEC data frame, recover data, and send the recovered data.

8. The optical receiving module according to claim 6, wherein the FEC decoding module comprises:
y frame header processing units, x FEC decoders, x payload recovering units, and a combining unit, wherein
the frame header processing unit is configured to receive the FEC data frame sent by the optical receiving interface, identify frame header information of the FEC data frame according to stored frame header information, determine frame boundaries of x transmission data frames in the FEC data frames to define the x transmission data frames, determine an FEC coding position in each of the x transmission data frames, and send the x transmission data frames to the x FEC decoders separately;
the FEC decoder is configured to receive the transmission data frames sent by the y frame header processing units, extract an FEC redundant code in each transmission data frame according to the determined FEC coding position in each transmission data frame, perform FEC decoding on data in each transmission data frame according to each FEC redundant code, and send each transmission data frame to a corresponding payload recovering unit;
the payload recovering unit is configured to receive y transmission data frames sent by the corresponding FEC decoder, remove the FEC redundant code in each transmission data frame, recover y paths of data, reconstruct y paths of data, and send the reconstructed data to the combining unit; and
the combining unit is configured to receive the data sent by the x payload recovering units, combine the x channels of data into one channel of data, and send the combined channel of data.

9. The optical receiving module according to any one of claims 6 to 8, wherein:
the optical receiving interface is further configured to extract a receiving signal clock from the optical signal, and take the receiving signal clock as a reference clock for the FEC decoding module to perform the FEC decoding; and
correspondingly, the optical receiving module further comprises:
a clock recovery module, configured to perform frequency division on the receiving signal clock extracted by the optical receiving interface to obtain a clock, and send the clock.

10. An apparatus for receiving an optical signal that corresponds to the apparatus for sending an optical signal according to claim 5, comprising a protocol processing module and the optical receiving module according to any of claim 6 to 9, wherein the protocol processing module comprises a protocol processing unit, and the optical receiving module sends recovered data to the protocol processing module.
